# EUROPEAN PATENT SPECIFICATION

(11) **EP 3 736 611 B1**
(45) Date of publication and mention of the grant of the patent: **22.02.2023**
(21) Application number: 20172049.7
(22) Date of filing: 29.04.2020
(51) Int. Cl.: G01W 1/14

(54) **RAIN/LIQUID SENSOR WITH IR-LIGHT ABSORPTION**
REGEN-/FLÜSSIGKEITSSENSOR MIT ABSORPTION VON IR-LICHT
CAPTEUR DE PLUIE/LIQUIDE AVEC ABSORPTION DE LUMIÈRE IR

(30) Priority: 07.05.2019 NL 2023081
(43) Date of publication of application: 11.11.2020
(73) Proprietor: Altop Patents II B.V., 7037 DZ Beek (Montferland) (NL)
(72) Inventor: SPEIJERS, Sam, 6587 AX Middelaar (NL)
(74) Representative: Klavers, Cornelis

(56) References cited:
- EP-A2- 0 680 860
- WO-A1-2018/095951
- JP-A- H04 278 488
- US-B1- 6 914 674

## Description

The present invention relates to a rain/liquid sensor according to the preamble of claim 1, and to a weather station comprising such a rain/liquid sensor.

Such a sensor is known from EP 0 680 860 A2. The known sensor comprises a light transmitter having at least one LED which is arranged to transmit light of a certain intensity, and a light receiver which is arranged to receive the transmitted light after it has travelled through the outside air and convert it to an electric output signal which contains a measure of the absorption of the transmitted light signal experienced in the outside air. The sensor further comprises a circuit with a first input connected to the light receiver and an output for supplying an electric signal which comprises a measure of a current quantity of falling liquid or rain in the outside air per unit of time. The density of falling drops in combination with the average dimensions of these drops and the shapes of individual drops is reflected in the light energy absorption eventually measured on the falling drops. In the sensor the signal representing the level of the emitted light that is the reference signal (P₀) is derived from the received light.

It is an object of the invention to provide an improved rain/liquid sensor yielding up-to-date and more reliable results, and being suitable, in addition, for applications requiring greater accuracy.

To achieve this, the rain/liquid sensor according to the invention is characterized in that:
the circuit is a differential circuit having a second input connected to the light transmitter for supplying an electric differential signal based on signals on both said inputs, and
the rain sensor comprises an element for adjusting the transmitting current and a daylight sensor connected to said element, which daylight sensor measures the intensity of daylight in the outside air and uses this measurement to adjust, together with the adjusting element arranged for this purpose, the intensity of the light transmitted by the LED.

An advantage of the rain/liquid sensor according to the invention resides in that the absorption related to the original light intensity transmitted by the light transmitter provides the output signal of the differential circuit with a reliable measurement result for absorption of the transmission signal at the current amount of falling drops per unit of time within the surface area of the air or space receiving the light. In particular the circuit being a differential circuit has a second input which is connected to the light receiver. As a result, the rain/liquid sensor obtained is simple in terms of hardware, but it is up to date and accurately determines the amount of rain/liquid, and the rain/liquid sensor can also be used for applications which, more generally formulated, require greater accuracy and insight into the currently falling amounts of liquid into a liquid sensor.

Furthermore the adjusting member/element uses the measured daylight to adjust the current to the LED and hence the intensity of the emitted light. As a result, varying disturbing daylight has less or no effect at all on the captured light.

In practice, persons skilled in the art can produce the sensor according to the invention either in an analogue or digital way, depending on the requirements, by means of corresponding electronic components.

Further detailed, possible embodiments explained in the other claims are mentioned, together with the associated advantages, in the following description.

The rain/liquid sensor according to the present invention will now be explained in greater detail with reference to the figure mentioned below, in which corresponding elements are indicated by means of the same reference numerals, and in which:

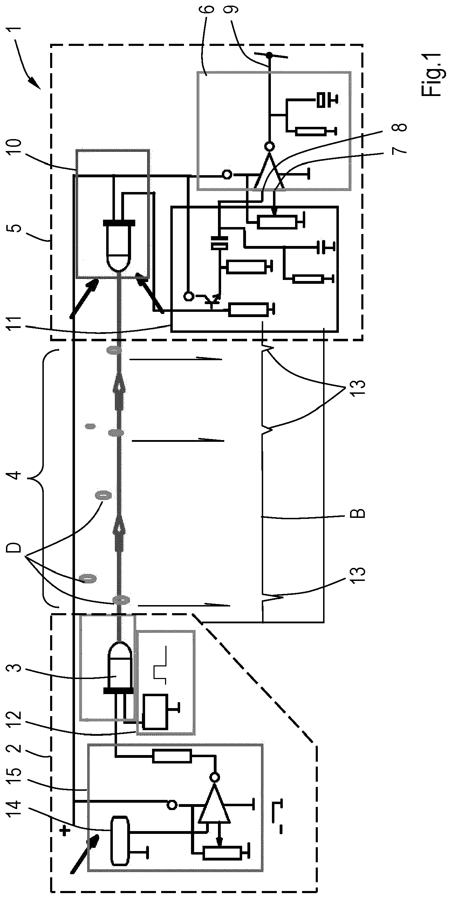

Figure 1 is a diagrammatic view of a rain/liquid sensor according to the present invention which, in principle, can be technically constructed in various ways.

Figure 1 shows a diagrammatic view of a rain or liquid sensor 1. The sensor 1 comprises a light transmitter 2 comprising preferably one or more LEDs 3 as transmitting element, preferably transmitting infrared light to a space or the outside air 4 where rain drops D can fall and then interact with the transmitted light. If the sensor 1 is used as a liquid sensor, the interaction takes place with drops D falling in the (outside) air or in the space.

The sensor 1 further comprises a light receiver 5 comprising, for example, one or more photodiodes on which the transmitted light is incident after absorption at the rain drops D falling on the receiver 5, which photodiode converts said light into an electric output signal. This output signals contains an electric measure of the absorption of the transmitted light in the outside air 4, in particular at rain drops D falling in the outside air.

In figure 1, the diagrammatically shown light intensity or variation in light intensity as a function of time of the light received in the receiver 5 is used to determine the difference with the intensity of the transmitted light. For the latter use can be made, if necessary, of the DC-level of the received light intensity shown in the diagram. Said difference is caused by light absorption at the drops D travelling through the free space or air 4 and it is a measure of the currently falling amount of drops D per unit of time. In practice, the light receiver 5 comprises a differential circuit 6 having inputs 7, 8. One of the inputs is connected to the light receiver 5, and a signal which is representative of the intensity of the light emitted by the LED 3 is applied to the other input. The circuit 6 further comprises an output 9 to which an electric differential signal has to be applied which contains a measure of said light absorption which in turn is a measure of a current amount of falling drops D.

To counteract the incidence of daylight in the light receiver 5 as much as possible, the sensor 1 may comprise a daylight shielding element, such as an infrared filter 10, which is located in front of the light receiver 5. In practice, the wavelength of the light emitted by the LED 3 is in the near-infrared range between 780 nm and 3 um, particularly near 850 nm. Daylight causes a slowly changing contribution of light energy as a function of time, which leads in the receiver 1 only to the detection of a direct-voltage level (DC level). As is shown in figure 1, said DC level is removed by incorporating a compensation circuit 11, diagrammatically shown, in the receiver 5. This could be a high-pass filter or band-pass filter which removes at least the DC component, and which removes the higher, possibly disturbing, frequencies from the received light signal, as long as these frequencies are not representative of the absorption of light at the drops D.

The sensor 1 may comprise an oscillator 12, which may or may not be pulsed, and which is connected to the light transmitter 2, said oscillator being in particular a pulse or block-wave oscillator. During actual pulses or block waves B, wherein the light is emitted by the LED, said light, which is at least partly absorbed by one or more drops D, is temporarily attenuated leading to light disturbances or dips 13, shown in figure 1, which are detected in the light receiver 5. Light absorption at small-size or large-size drops D leads to dips 13 having distinguishable depths and widths in the light-absorption pattern shown. The surface area of a disturbance 13 relative to the DC level has been found to be a reliable measure of the size of the falling rain drops D. Specifically, said surface area in combination with the frequency of falling drops D, i.e., the frequency of the dips 13, provides reliable information about, in particular, the amount of rainfall per surface area per unit of time. The electronic circuits arranged behind the light receiver 5 supply a signal containing said information to output 9. Any non-linearities between the surface area of the dips 13 or the frequency of the dips and the actual amount of precipitation can be corrected in the analogue or digital output signal.

In the case of pulsed operation, as mentioned hereinabove, the pulse frequency of the pulse-shaped or block-wave light transmitted by the transmitter 2 lies in the range of 0-10 KHz, in particular 0-5 KHz, to enable repeated measurements of the rain to be carried out.

If disturbing daylight is or can be incident on the receiver 5, then, in addition to the filter 10, a daylight sensor 14 measuring the daylight intensity in the space or the outside air 4 may offer a solution. In this case, the sensor 1 comprises an element 15 for adjusting the transmitting current, which adjusting element is located in the light transmitter 2 and is connected to the daylight sensor 14. The adjusting member 15 uses the measured daylight to adjust the current to the LED and hence the intensity of the emitted light. As a result, varying disturbing daylight has less or no effect at all on the captured light.

The present rain/liquid sensor 1 can be implemented by a person skilled in the art in an analogue or either partly or completely digital way. The figure shows diagrammatically an analogue implementation. In a further possible embodiment, the sensor 1 comprises an analogue-digital (A/D) converter, not shown in the figure, wherein the output of the differential circuit 6, if it is an analogue differential circuit, is connected to the A/D converter to supply a digital representation of the electric differential signal.

In, for example, remote weather stations at least the locally measured current volume of rain is sent in a digital, often wireless, way to a processing central collector.

Dewatering- and watering systems, or drainage systems such as used for riding arenas will benefit if, immediately after a change in rain condition, local, accurate, quantitative action can be taken even before the adverse effects of a shower on the soil are noticeable.

## Claims

1. A rain/liquid sensor (1) comprising:
- a light transmitter (2) having at least one LED (3) which is arranged to transmit light of a certain intensity,
- a light receiver (5) which is arranged to receive the transmitted light after it has travelled through the outside air (4) and convert it to an electric output signal which contains a measure of the absorption of the transmitted light signal experienced in the outside air (4), and
- a circuit (6) with a first input (8) connected to the light receiver (5) and an output (9) for supplying an electric signal which comprises a measure of a current quantity of falling liquid or rain in the outside air (4) per unit of time,
**characterized in that**
the circuit (6) is a differential circuit (6) having a second input (7) connected to the light transmitter (2) for supplying an electric differential signal based on signals on both said inputs (7, 8), and
the rain sensor (1) further comprises an element (15) for adjusting the transmitting current and a daylight sensor (14) connected to said element (15), which daylight sensor (14) measures the intensity of daylight in the outside air (4) and uses this measurement to adjust, together with the adjusting element (15) arranged for this purpose, the intensity of the light transmitted by the LED (3).

2. The sensor (1) according to claim 1, **characterized in that** the at least one LED, is an infrared LED (3).

3. The sensor (1) according to claim 1 or 2, **characterized in that** the wavelength of the light transmitted by the LED (3) is in the near-infrared range between 780 nm and 3 um, more particularly near 850 nm.

4. The sensor (1) according to any one of the claims 1-3, **characterized in that** the differential circuit (6) is a digital or analogue differential circuit.

5. The sensor (1) according to any one of the claims 1-4, **characterized in that** the rain sensor (1) comprises an analogue-digital (A/D) converter, and the output (9) of the differential circuit (6), if it is an analogue differential circuit, is connected to the A/D converter to supply a digital representation of the electric differential signal.

6. The sensor (1) according to any one of claims 1-5, **characterized in that** the rain sensor (1) comprises a daylight-blocking element, such as an infrared filter (10), in front of the light receiver (5).

7. The sensor (1) according to any one of the claims 1-6, **characterized in that** the rain sensor (1) comprises an AC voltage generator (12), which may or may not be pulsed, or a pulse or block wave generator (12), which are connected to the light transmitter (2), and a compensation circuit (11) arranged to remove the DC level, which is representative of daylight received by the light receiver (5), from the signal received by the light receiver (5).

8. The sensor (1) according to claim 7,
**characterized in that** the pulse frequency of the pulse-shaped or block-shaped light transmitted by the light transmitter (2) lies in the range of 0-10 KHz, in particular in the range of 0-5 KHz.

9. A weather station comprising a rain/liquid sensor (1) according to any one of claims 1-8.

## Patentansprüche

1. Regen-/Flüssigkeitssensor (1), umfassend:
- einen Lichtsender (2) mit mindestens einer LED (3), die angeordnet ist, um Licht einer bestimmten Intensität zu senden,
- einen Lichtempfänger (5), der angeordnet ist, um das gesendete Licht zu empfangen, nachdem es sich durch die Außenluft (4) bewegt hat, und es in ein elektrisches Ausgangssignal umzuwandeln, das eine Messgröße der Absorption des gesendeten Lichtsignals enthält, das es an der Außenluft (4) erfährt, und
- eine Schaltung (6) mit einem ersten Eingang (8), der mit dem Lichtempfänger (5) verbunden ist, und einem Ausgang (9) zum Zuführen eines elektrischen Signals, das eine Messgröße einer aktuellen Menge einer/s fallenden Flüssigkeit oder Regens an der Außenluft (4) pro Zeiteinheit umfasst,
**dadurch gekennzeichnet, dass**
die Schaltung (6) eine Differenzschaltung (6) ist, die einen zweiten Eingang (7) aufweist, der mit dem Lichtsender (2) verbunden ist, um ein elektrisches Differenzsignal basierend auf Signalen an den beiden Eingängen (7, 8) zuzuführen, und
der Regensensor (1) ferner ein Element (15) zum Einstellen des Sendestroms und einen Tageslichtsensor (14), der mit dem Element (15) verbunden ist, umfasst, wobei der Tageslichtsensor (14) die Intensität von Tageslicht in der Außenluft (4) misst und diese Messung nutzt, um, zusammen mit dem Einstellelement (15), das für diesen Zweck angeordnet ist, die Intensität des Lichts einzustellen, das durch die LED (3) gesendet wird.

2. Sensor (1) nach Anspruch 1, **dadurch gekennzeichnet, dass** die mindestens eine LED eine Infrarot-LED (3) ist.

3. Sensor (1) nach Anspruch 1 oder 2, **dadurch gekennzeichnet, dass** die Wellenlänge des Lichts, das durch die LED (3) gesendet wird, im Nahinfrarotbereich zwischen 780 nm und 3 µm, insbesondere nahe 850 nm, liegt.

4. Sensor (1) nach einem der Ansprüche 1-3, **dadurch gekennzeichnet, dass** die Differenzschaltung (6) eine digitale oder analoge Differenzschaltung ist.

5. Sensor (1) nach einem der Ansprüche 1-4, **dadurch gekennzeichnet, dass** der Regensensor (1) einen Analog-Digital-Wandler (A/D-Wandler) umfasst und der Ausgang (9) der Differenzschaltung (6), wenn sie eine analoge Differenzschaltung ist, mit dem A/D-Wandler verbunden ist, um eine digitale Darstellung des elektrischen Differenzsignals zuzuführen.

6. Sensor (1) nach einem der Ansprüche 1-5, **dadurch gekennzeichnet, dass** der Regensensor (1) ein Tageslichtblockierelement, wie etwa einen Infrarotfilter (10), vor dem Lichtempfänger (5) umfasst.

7. Sensor (1) nach einem der Ansprüche 1-6, **dadurch gekennzeichnet, dass** der Regensensor (1) einen Wechselspannungsgenerator (12), der gepulst sein kann oder nicht, oder einen Puls- oder Blockwellengenerator (12), die mit dem Lichtsender (2) verbunden sind, und eine Kompensationsschaltung (11) umfasst, die angeordnet ist, um den Gleichstrompegel, der das Tageslicht repräsentiert, das durch den Lichtempfänger (5) empfangen wird, aus dem Signal, das durch den Lichtempfänger (5) empfangen wird, zu entfernen.

8. Sensor (1) nach Anspruch 7, **dadurch gekennzeichnet, dass** die Pulsfrequenz des pulsförmigen oder blockförmigen Lichts, das durch den Lichtsender (2) gesendet wird, im Bereich von 0-10 kHz, insbesondere im Bereich von 0-5 kHz, liegt.

9. Wetterstation, umfassend einen Regen-/Flüssigkeitssensor (1) nach einem der Ansprüche 1-8.

## Revendications

1. Capteur de pluie/liquide (1) comprenant:
- un transmetteur de lumière (2) comportant au moins une LED (3) qui est conçue pour transmettre de la lumière d'une certaine intensité,
- un récepteur de lumière (5) qui est conçu pour recevoir la lumière transmise une fois qu'elle a traversé l'air extérieur (4) et la convertir en un signal de sortie électrique qui contient une mesure de l'absorption du signal de lumière transmise apparu dans l'air extérieur (4), et
- un circuit (6) doté d'une première entrée (8) connectée au récepteur de lumière (5) et d'une sortie (9) pour fournir un signal électrique qui comprend une mesure d'une quantité actuelle de liquide ou de pluie qui tombe dans l'air extérieur (4) par unité de temps,
**caractérisé en ce que**
le circuit (6) est un circuit différentiel (6) doté d'une seconde entrée (7) connectée au transmetteur de lumière (2) pour fournir un signal différentiel électrique basé sur des signaux sur lesdites deux entrées (7, 8), et
le capteur de pluie (1) comprend en outre un élément (15) pour régler le courant de transmission et un capteur de lumière du jour (14) connecté audit élément (15), lequel capteur de lumière du jour (14) mesure d'intensité de lumière du jour dans l'air extérieur (4) et utilise cette mesure pour régler, avec l'élément de réglage (15) conçu à cet effet, l'intensité de la lumière transmise par la LED (3).

2. Capteur (1) selon la revendication 1, **caractérisé en ce que** l'au moins une LED est une LED à infrarouges (3).

3. Capteur (1) selon la revendication 1 ou 2, **caractérisé en ce que** la longueur d'onde de la lumière transmise par la LED (3) est dans la plage proche infrarouge entre 780 nm et 3 µm, plus particulièrement environ 850 nm.

4. Capteur (1) selon l'une quelconque des revendications 1 à 3, **caractérisé en ce que** le circuit différentiel (6) est un circuit différentiel numérique ou analogique.

5. Capteur (1) selon l'une quelconque des revendications 1 à 4, **caractérisé en ce que** le capteur de pluie (1) comprend un convertisseur analogique-numérique (A/D), et que la sortie (9) du circuit différentiel (6), si c'est un circuit analogique différentiel, est connectée au convertisseur A/D pour fournir une représentation numérique du signal différentiel électrique.

6. Capteur (1) selon l'une quelconque des revendications 1 à 5, **caractérisé en ce que** le capteur de pluie (1) comprend un élément bloquant la lumière du jour, comme un filtre infrarouge (10), en face du récepteur de lumière (5).

7. Capteur (1) selon l'une quelconque des revendications 1 à 6, **caractérisé en ce que** le capteur de pluie (1) comprend un générateur de tension AC (12), qui peut ou peut ne pas être pulsé, ou un générateur d'ondes d'impulsion ou de bloc (12), qui sont connectés au transmetteur de lumière (2), et un circuit de compensation (11) conçu pour supprimer le niveau DC, qui est représentatif de lumière du jour reçue par le récepteur de lumière (5), du signal reçu par le récepteur de lumière (5).

8. Capteur (1) selon la revendication 7, **caractérisé en ce que** la fréquence d'impulsion de la lumière en forme d'impulsion ou en forme de bloc transmise par le transmetteur de lumière (2) se situe dans la plage de 0 à 10 kHz, en particulier dans la plage de 0 à 5 kHz.

9. Station météorologique comprenant capteur de pluie/liquide (1) selon l'une quelconque des revendications 1 à 8.
